# EUROPÄISCHE PATENTSCHRIFT

(11) **EP 2 906 398 B1**
(45) Veröffentlichungstag und Bekanntmachung des Hinweises auf die Patenterteilung: **29.11.2017**
(21) Anmeldenummer: 13831928.0
(22) Anmeldetag: 14.10.2013
(51) Int. Cl.: B27N 3/00, B29C 44/32, B32B 21/04, B32B 21/02

(54) **KONTINUIERLICHES VERFAHREN ZUR HERSTELLUNG EINER LEICHTBAU-SANDWICHPLATTE UND NACH DIESEM VERFAHREN HERSTELLBARE LEICHTBAU-SANDWICHPLATTEN**
CONTINUOUS METHOD FOR PRODUCING A LIGHTWEIGHT SANDWICH PANEL AND LIGHTWEIGHT SANDWICH PANELS PRODUCIBLE ACCORDING TO THIS METHOD
PROCÉDÉ CONTINU POUR PRODUIRE UN PANNEAU SANDWICH LÉGER ET PANNEAUX SANDWICHS LÉGERS POUVANT ÊTRE PRODUITS SELON CE PROCÉDÉ

(30) Priorität: 15.10.2012 DE 102012020145
(43) Veröffentlichungstag der Anmeldung: 19.08.2015
(73) Patentinhaber: NEUBAUER, Gerald, 22159 Hambourg (DE); Helmrich, Lutz, 21465 Wentorf bei Hamburg (DE); EPPLE, Albrecht, 59069 Hamm (DE); Scheiner, Hugo, 97828 Marktheidenfeld (DE)
(72) Erfinder: Gerald Neubauer, 22159 Hamburg (DE); Lutz Helmrich, 21465 Wentorf bei Hamburg (DE)
(74) Vertreter: RGTH
(86) Internationale Anmeldenummer: PCT/DE2013/000598
(87) Internationale Veröffentlichungsnummer: WO 2014/063672

(56) Entgegenhaltungen:
- EP-A1- 1 561 554
- WO-A2-2010/119431
- AT-U1- 6 375
- CA-A1- 2 693 186

## Beschreibung

Die Erfindung betrifft ein kontinuierliches Verfahren zur Herstellung einer Leichtbau-Sandwichplatte gemäß Anspruch 1.

Die Literatur auf dem Gebiet der Technik, auf das sich die Erfindung bezieht, ist von einer "flexiblen" oder, weniger euphemistisch ausgedrückt, chaotischen Terminologie geprägt, wobei nicht nur die Bezeichnung bestimmter Objekte, Vorgänge, Zustände und Eigenschaften von Veröffentlichung zu Veröffentlichung unterschiedlich ist und die gleiche Bezeichnung für unterschiedliche Begriffsinhalte benutzt wird, sondern sogar innerhalb einer Veröffentlichung konsistente Terminologie die Ausnahme von der Regel ist.

Um den Erfordernissen von Knappheit und Klarheit von Beschreibung und Ansprüchen genügen zu können, wird der eigentlichen Beschreibung deshalb eine Auflistung der in Beschreibung und Ansprüchen verwendeten Termini technici und ihrer Akronyme, jeweils mit einer Definition ihres Begriffsinhalts, sowie gegebenenfalls der ihnen zugewiesenen Bezugszeichen vorangestellt.

### 1) Holzwerkstoffplatte:

Sammelbegriff für aus Schichten, die Vollholz, Sperrholz, Holzspan- und/oder Fasermaterial umfassen oder daraus bestehen, bestehende Platten.

### 2) Vollholzplatte:

Aus einem Holzbrett oder an ihren Schmalseiten miteinander verleimten Holzbrettern bestehende Holzplatte.

### 3) Holzspanplatte (Akronym: HSP):

Durch Verpressen einer dreischichtigen Lage aus beleimten Holzspänen zwischen beheizbaren, ca. 130 bis 250° C heißen Pressflächen mit einem Pressdruck von bis zu etwa 30 bar erzeugte Platte mit
3.1) einer unteren Deckschicht und einer oberen Deckschicht, die jeweils eine glatte oder durch Feinschleifen mattierte Außenfläche und eine raue Innenfläche aufweisen, aus dicht gepackten und fest miteinander verklebten Holzspänen bestehen, sowie eine Dicke von in der Regel ca. 2 bis 5 mm aufweisen,
   sowie
3.2) einer Kernschicht aus im Vergleich zu den Deckschichten gröberen Holzspänen, die weniger dicht gepackt und nicht so fest miteinander verklebt sind, wie die der Deckschichten, eine geringere Dichte aufweist und erheblich, in der Regel um ein Vielfaches dicker ist als eine Deckschicht.

### 4) Leichtbau-Sandwichplatte (Akronym: LSP):

Platte mit
4.1) einer unteren und einer oberen Deckschicht, die der einer HSP oder einer Holzfaserplatte entspricht, sowie
4.2) einer zwischen den Deckschichten angeordneten Zwischenschicht, die einen Kunstharzhartschaum umfasst, in den gegebenenfalls eine Armierung aus Spänen und/oder Fasern eingebettet ist, und die eine Dichte von etwa 20 bis 80 g/dm³, sowie eine Dicke aufweist, die erheblich, in der Regel um ein mehrfaches größer ist als die einer Deckschicht.

### 5) Lage:

Loses, flächig gestreutes Haufwerk, umfassend oder bestehend aus beleimten Holzspänen und/oder -fasern;
5.1) untere Decklage und obere Decklage:
   Lagen aus mit einer dünnen Schicht eines Klebers überzogenen Holzspänen und/oder -fasern, die zwischen beheizbaren Pressflächen mit einem Pressdruck von bis zu etwa 30 bar und einer Temperatur von etwa 130 bis 250°C zu jeweils in der Regel ca. 2 bis 5 mm starken Schichten aus dicht gepackten und fest miteinander verklebten Holzspänen und/oder -fasern verdichtbar sind.
5.2) Zwischenlage:
   Zwischen den Innenflächen und der unteren und oberen Decklage angeordnete Lage aus unvollständig beleimten, vorzugsweise relativ groben Holzspänen und/oder -fasern, die beim Verpressen der Decklagen zu einer Kernschicht mit geringerer Dichte aus schwächer miteinander verklebten Holzspänen und/oder -fasern und einer erheblich, in der Regel um ein mehrfaches größeren Dicke als die einer aus einer der Decklagen erzeugten Deckschicht.

Vollholzplatten waren bis zum Anfang des 20. Jahrhunderts die einzigen verfügbaren Holzwerkstoffplatten, obwohl sie für die industrielle Massenfertigung aus einer Reihe von Gründen ungeeignet waren wobei die Industrialisierung schon einige Jahrzehnte früher begonnen hatte.

Nach dem 1. Weltkrieg wurden die Vollholzplatten für Industrieprodukte durch Sperrholzplatten und später durch HSP ersetzt, die auch heute noch den Löwenanteil des in der Möbel- und der Bauindustrie verarbeiteten Holzwerkstoffplattenmaterials ausmachen, obwohl sie einige Nachteile aufweisen. So benötigt man für ihre Herstellung sehr viele Ressourcen (Holz, Kleber und Energie), die dann zu einer sehr schweren (600 bis 750g/dm³) Platte führen. LSP, die eine wesentlich geringere Dichte aufweisen, haben bislang wegen der hohen Herstellungskosten nur auf Spezialgebieten, wie dem Boots- und Flugzeugbau sowie der Herstellung von Windrädern praktische Bedeutung erlangt, wo ihre Leichtbautauglichkeit ihren hohen Preis zu einem allenfalls sekundären Aspekt macht.

Es gab daher zahlreiche Versuche, kostengünstige und ressourcenschonende Verfahren zur Herstellung von LSP zu entwickeln, die jedoch sämtlich keinen wirklichen Erfolg brachten, da die Herstellungskosten zu hoch und/oder die anwendungstechnischen Eigenschaften ungenügend waren.

Nächstliegender Stand der Technik ist ein in der Patentanmeldung WO 2008/071618 A2 beschriebenes Verfahren. Hier wird ein kontinuierliches Verfahren zur Herstellung von Leichtbau-Sandwichplatten, bei denen in einem ersten Schritt eine Decklagenschicht aus Spänen durch Verpressen und Erhitzen erzeugt wird, welche dann mittels einer Trennvorrichtung in 2 Decklagen aufgeteilt wird, um dann ein verschäumbares Zwischenschichtmaterial einzubringen, welches dann verschäumt und die fertige Sandwichplatte ausbildet, beschrieben.

In der Patentanmeldung US 2010 / 0 133 713 A1 wird ebenfalls ein Verfahren beschrieben, bei dem zunächst eine Deckplatte erzeugt wird, die dann horizontal mittels eines "Dampfschwertes" aufgeteilt wird, um dann die aufschäumende Zwischenschicht einzubringen.

Diese Anmeldung unterscheidet sich hiervon in der Art und Weise, wie die Trennung der Deckschichten erfolgt. Gemäß WO 2008/071618 A2 und US 2010 / 0 133 713 A1 erfolgt die Trennung durch eine entsprechende Vorrichtung, während nach dieser Anmeldung die Trennung durch Auswahl geeigneter Prozessbedingungen erfolgt. Auch in der Patentschrift EP 1 469 140 B1 ist das Auftrennen einer Decklagenschicht durch eine Teilvorrichtung, ein Keil beschrieben.

In der Patentanmeldung WO 2010/133610 A1 ist in Ergänzung zu der Patentanmeldung WO 2008/071618 A2 ein Novolac-System für die Schaumzwischenschicht angegeben.

In der Patentanmeldung JP S57-185 136 A wird die Verwendung von PU-Systemen zur Herstellung von Holzspanplatten beschrieben, wobei Wasser zugesetzt wird um ein Schäumen des PU-Systems zu erreichen.

Aus der Patentanmeldung DE 12 28 403 A ist die Verwendung von PU-Systemen für Sandwichplatten mit Holzspandecklagen bekannt.

Die CA-A-2 693 186 offenbart eine Leichtbau-Sandwichplatte mit einer unteren Deckschicht und einer oberen Deckschicht aus beleimten Holzspänen, einer zwischen den Deckschichten angeordneten und diese fest verbindenden Zwischenschicht aus Polyurethanhartschaum, wobei die einander zugewandten Innenflächen der Deckschichten ein raues Profil aufweisen, deren Unebenheiten mit dem Polyurethanhartschaum ausgefüllt sind, aus dem die Zwischenschicht besteht und so 0,5 bis 2 mm starke Übergangszonen bilden und die Dichte der Zwischenschicht zwischen 20 und 100g /dm³ und die der Leichtbau-Sandwichplatte zwischen 100 und 400 g/dm³ liegt.

Verwiesen wird außerdem auf die JP-A-2002 338373, die DE-A-23 57817, die DE-A-10 2004 053 871, die DE-A-42 26 988 und die DE 202 15 919 U1.

Aufgabe der Erfindung ist es daher, ein kostengünstiges, kontinuierliches und hochwertiges LSP-Herstellverfahren vorzuschlagen.

Diese Aufgabe wird erfindungsgemäß gelöst durch ein Verfahren mit den in Anspruch 1 angegebenen Merkmalen. Vorteilhafte Ausgestaltungen der Erfindung sind in den Unteransprüchen beschrieben.

Bei dem erfindungsgemäßen Verfahren wird in einer ersten bevorzugten Ausführungsform zunächst in einem herkömmlichen Verfahren in einer Doppelbandpresse eine herkömmliche HSP, die nur zwei Deckschichten und keine Zwischenschicht enthält aus beleimten Holzspänen hergestellt. Um die Zwischenschicht hinterher einbringen zu können, müssen die Deckschichten getrennt werden. Hierzu wird kein Werkzeug verwendet, sondern der Dampfdruck, der im Inneren der HSP beim Verpressen und Erwärmen entsteht wird nicht durch Abkühlung vor dem Verlassen der Presse abgesenkt, sondern wird genutzt, um die Decklagen auseinander zu reißen.

Bei der Herstellung herkömmlicher HSP ist der Dampfdruck in der Platte eine der Grenzen, der Herstellgeschwindigkeit. Der Dampfdruck in der HSP darf beim Verlassen der Presse nicht zu hoch sein, da die Platte teilweise oder ganz mittig auseinander reißen und dadurch unbrauchbar werden würde. Deshalb wird permanent kontrolliert ob mittige Risse auftreten um den Prozess ständig nachzusteuern.

Dieser bisher unerwünschte Effekt ist eine der Grundlagen dieser Erfindung um eine Zwischenschicht nachträglich einbringen zu können und befreit den Herstellprozess gleichzeitig von einer Reihe von Beschränkungen, die nun keine Rolle mehr spielen.

Die Kerntemperatur in der HSP kann höher werden als bisher, was den Abbindeprozess des Leims beschleunigt. Es kann im Ausgangsmaterial mehr Wasser enthalten sein, da überschüssiges Wasser als Dampf nach der Trennung der Decklagen auf den Innenseiten der Decklagen entweichen und seitlich abgeführt werden kann, was die Kosten für die Trocknung senkt und die Wärmeleitung im Prozess erleichtert. Da die Decklagen vor dem Verlassen der Presse nicht abkühlen müssen, kann die Presse deutlich verkürzt werden.

Nach dem Auseinanderreißen der Deckschichten werden diese auseinandergeführt, um ein Polyurethanschaumsystem als Zwischenschicht einzubringen, dessen Polymerisationsprozess durch die vorhandene Feuchtigkeit und die in den Decklagen noch enthaltene Wärme wesentlich beschleunigt wird. Nach dem der Polyurethanschaum begonnen hat aufzuschäumen, werden die Deckschichten wieder zusammengeführt, so dass sie mit der nun zwischen ihnen liegenden Polyurethanschaumzwischenschicht eine Platte bilden. Der Polyurethanschaum wird beim Aufschäumen alle Vertiefungen in den rauen Innenseiten der Deckschichten ausfüllen und so eine Übergangsschicht von der Deckschicht zu der Zwischenschicht bilden. Der Polyurethanschaum wird ohne zusätzlichen Kleber von selbst eine feste Verbindung zu den Deckschichten bilden. Die Platte bei der nun alle Schichten miteinander verbunden sind, wird dann zum Kalibrieren ihrer Dicke und zum Aushärten der Zwischenlage in einer weiteren Doppelbandpresse oder Form weitergeführt, bis sie formstabil genug ist, um sie abzukühlen und abzustapeln.

Die Decklagen können bestehen aus Holzspänen (Span- oder OSB-Platte), Holzfasern (MDF- oder HDF-Platte) oder anderen nachwachsenden organischen Stoffen (z.B.: Rinde, Gräser, Stroh).

Harnstoffharze sind heute die in der Holzwerkstoffindustrie am häufigsten eingesetzten Leimsysteme. Bei dem erfindungsgemäßen Verfahren lassen sich jedoch auch alle anderen heute üblichen Leime einsetzen. Ein Leimsystem, das bei Temperaturen von über 100°C abbindet ist jedoch bevorzugt, da der Dampfdruck die Trennung der Decklagen herbeiführt und die Reaktion beim Einschäumen der Zwischenlage beschleunigt.

Zum Aufschäumen des Polyurethanschaums als Zwischenschicht bedarf es eines Treibmittels. Hier können verdampfbare Treibmittel wie beispielsweise Pentan eingesetzt werden. Aus Gründen der Arbeitssicherheit und Umweltfreundlichkeit bietet sich jedoch ein wassergetriebenes Polyurethansystem an, bei dem durch die Reaktion von Wasser und Isocyanat Kohlendioxid entsteht und als Treibmittel fungiert; hierbei dünsten keine Kohlenwasserstoffe aus, die eine Explosionsgefahr in sich bergen und die Umwelt belasten.

Sollten Platten hergestellt werden, die besonders stark verleimt sind oder sollte ein Kleber eingesetzt werden, der bei weniger als 100°C abbindet, so kann es sein, dass der Dampfdruck nicht ausreicht, um die Platte auseinander zu reißen. In einem solchen Fall kann die Trennung der Decklagen durch das Einstreuen einer Trennlage zwischen den Deckschichten vor dem Verpressen derselben erforderlich sein. Als Trennlage können dienen: unbeleimte Holzspäne, die in die Zwischenschicht oder die Übergangszonen von den Deckschichten zur Zwischenschicht fest mit eingebunden werden.

Auch andere Trennlagen sind denkbar, wobei diese entweder in die Zwischenschicht oder die Übergangszonen mit eingebunden werden können, oder nach dem Verpressen und Trennen der Deckschichten, vor dem Einbringen der Zwischenschicht, wieder entfernt werden können. Für Anwendungen, bei denen die Deckschichten sehr unterschiedlich belastet werden, ist es sinnvoll, Leichtbau-Sandwichplatten (LSP) herzustellen, die unterschiedlich dicke Deckschichten haben. Dies lässt sich erreichen, indem durch unterschiedlich warme Pressflächen oben und unten die kälteste Zone in der Holzspanpalette (HSP) während des Verpressens nicht in der Mitte, sondern höher oder tiefer liegt. Die Platte wird entsprechend nicht mittig, sondern asymmetrisch auseinander reißen. Auch durch asymmetrisches Einstreuen einer Trennschicht lässt sich dieser Effekt erzielen.

Die Polyurethanhartschaum-Zwischenschicht verbindet sich dadurch, dass sie in situ aufgeschäumt wird von alleine, ohne zusätzlichen Kleber, fest mit den Deckschichten. Ebenso kann die Polyurethanhartschaum-Zwischenschicht Stoffe, die vor dem Aufschäumen in die Zwischenschicht eingebracht werden, fest in ihre Struktur einbinden. Denkbar sind hier beispielsweise Glasfasern, Kohlefasern oder Holzfasern, um die Stabilität zu erhöhen, Siliziumoxid oder Bleisulfat, um Schall oder Strahlung zu absorbieren, Schaumpartikel aus Kunststoffen, beispielsweise Polystyrol oder auch andere Polyurethanschäume, aber auch organische Schäume aus Mais- oder Weizenstärke sind denkbar und können als kostengünstiger Füllstoff die Kosten für die Zwischenschicht senken, ohne die Eigenschaften wesentlich zu verschlechtern.

Zur Verklebung der Deckschichten taugen alle Leime, die auch zur Herstellung von herkömmlichen Holzspanplatten benutzt werden können; heute üblich sind Formaldehyd-Harnstoff-Harze oder Isocyanate.

Die nach den zuvor beschriebenen Verfahren herstellbaren Platten zeichnen sich durch Deckschichten, die heutigen HSP entsprechen, und einer dazwischen liegenden Polyurethanhartschaumschicht, die, da sie in situ aufgeschäumt wurde, mit den rauen Innenseiten der Deckschichten eine Übergangszone bildet, indem alle Unebenheiten der Innenseiten der Deckschichten mit Polyurethanhartschaumschicht ausgefüllt werden. Die Übergangszone weist dann eine Stabilität auf, die mindestens der der Zwischenschicht entspricht. Die Polyurethanhartschaumschicht-Zwischenschicht weist je nach gewünschter Stabilität der Platte eine Dichte von 20 bis 80g/dm³ auf. Bei einem Schaumgewicht von unter 20g/dm³ wird die Zwischenschicht instabil und die LSP unbrauchbar und bei einem Schaumgewicht von über 80g/dm³ werden die Deckschichten aus Holzspänen der Qualität der Zwischenschicht nicht mehr gerecht, außerdem wird die LSP wesentlich teurer als eine herkömmliche HSP. Bei einem Gewicht der Deckschicht von 600 bis 750g/dm³ ergibt sich ein Gewicht der LSP von 100 bis 400g/dm³.

Durch das Einbinden anderer Stoffe in die Zwischenschicht können sich die Dichten der Zwischenschicht und der gesamten LSP natürlich wesentlich verändern.

Für das beschriebene Verfahren bedarf es aller Vorrichtungen, die auch zur Herstellung einer herkömmlichen HSP gebraucht werden, wobei hinter der Presse und vor der Ablängsäge eine Einrichtung angeordnet ist, die Elemente zum Auseinanderführen der durch Dampfdruck getrennten Deckschichten, sowie Sprüheinrichtungen zum Sprühen eines flüssigen Polyurethansystems, sowie eine Einrichtung mit parallel geführten Pressflächen zum Aufschäumen, Aushärten und Kalibrieren einer ein aufschäumbares Polyurethansystem umfassenden Zwischenschicht aufweist.

## Patentansprüche

1. Kontinuierliches Verfahren zur Herstellung von Leichtbau-Sandwichplatten mit:
einer unteren Deckschicht,
und
einer oberen Deckschicht,
die beide aus dicht gepackten und fest miteinander verklebten Holzspänen bestehen und eine glatte Außenfläche, sowie eine raue, dampfdurchlässige Innenfläche aufweisen
sowie
einer Zwischenschicht, die einen Kunstharzhartschaum umfasst, die zwischen der unteren und der oberen Deckschicht angeordnet und damit fest verbunden ist, umfassend mindestens folgende Schritte:
1) Bereitstellen einer geschichteten Lage, die mindestens eine gestreute untere Decklage und eine darüber gestreute obere Decklage, beide aus beleimten Holzspänen
2) Verpressen dieser Lage zwischen beheizten Pressflächen mit einem Pressdruck von bis zu etwa 30 bar und einer Temperatur der Pressflächen von etwa 130 bis 250°C zu einer Holzspanplatte
3) Auseinanderführen der Pressflächen und dadurch Druckentlastung der Holzspanplatte wodurch die Holzspanplatte infolge des in ihrer Kernzone aufgebauten Dampfdrucks mittig aufreißt und sich in zwei gleich starke Deckschichten mit jeweils einer glatten Außen- und einer rauen Innenfläche teilt,
4) Auseinanderführen der Deckschichten, so dass die Zwischenschicht zwischen diesen eingebracht werden kann,
5) Sprühen eines zu Polyurethanhartschaum aufschäum- und aushärtbaren Polyurethansystems mit mindestens folgenden Komponenten:
• Isocyanat und/oder Polyisocyant(e),
• mindestens ein Polyol und
• ein oder mehrere verdampfbare(s) Treibmittel auf die Innenfläche(n) der unteren Deckschicht oder beider Deckschichten,
6) Aufschäumen und Kondensieren des Polyurethansystems, bis die Polyurethanschaumschicht(en) zähflüssig bis plastisch verformbar, aber noch verpressbar ist/sind
7) Rückführung der oberen und/oder unteren Deckschicht, so dass ihr Abstand, wenn eine Leichtbau-Sandwichplatte gefertigt werden soll, bei der beide Deckschichten eine glatte Außenfläche aufweisen, gleich der Solldicke oder, wenn eine Leichtbau-Sandwichplatte gefertigt werden soll, bei der eine oder beide Deckschichten eine durch Feinschleifen mattierte Außenfläche aufweisen, etwa 0,1 bis 0,3 mm größer ist als die Solldicke der Leichtbau-Sandwichplatte,
8) Stabilisieren der nach 7) kalibrierten Leichtbau-Sandwichplatte, indem man sie zwischen in dem in 7) definierten Abstand parallel verlaufenden Pressflächen führt, bis die Zwischenschicht zu Polyurethanhartschaum ausreagiert hat,
9) Konfektionieren (Ablängen) und Versäubern der Kanten der als Endlosband gefertigten Leichtbau-Sandwichplatte zu Platten mit handelsüblichen Abmessungen,
und
10) gegebenenfalls Mattieren der Außenfläche(n) einer oder beider Deckschichten durch Feinschleifen bis zur Solldicke der Leichtbau-Sandwichplatte
**dadurch gekennzeichnet, dass**
a) die Temperatur der Pressflächen und die Dauer des Pressvorgangs so gewählt werden,· dass sich im Bereich der Innenflächen der Deckschichten ein hoher Dampfdruck aufbaut, der bei der durch das Auseinanderführen der Pressflächen im Schritt 3) bewirkten Druckentlastung die in Schritt 2) erzeugte Holzspanplatte mittig aufreißt und in zwei gleich starke Deckschichten aus dicht gepackten, fest miteinander verklebten Holzspänen mit glatten Außenflächen und rauen Innenflächen trennt,
b) die Deckschichten, beim Verlassen der Presse mittels Walzen und/oder Transportbändern auseinander geführt werden, so dass der Abstand ihrer Innenflächen groß genug wird, um die Sprüh- oder Einbringungsvorrichtung für das Sprühen oder sonstige Einbringen des Polyurethansystems gemäß Schritt 5 zwischen den Deckschichten platzieren zu können
c) die Wärme, die beim Verpressen der Deckschichten in diese eingebracht wurde genutzt wird, um den Reaktionsprozess des Polyurethansystems zu beschleunigen.

2. Verfahren nach Anspruch 1, **dadurch gekennzeichnet, dass** das Polyurethansystem neben oder anstelle des oder der verdampfbaren Treibmittel Wasser enthält, das in die chemische Reaktion eingebunden wird, so dass Kohlendioxid entsteht, welches das oder die Treibmittel unterstützt oder ersetzt.

3. Verfahren nach Anspruch 1 oder 2, jedoch **dadurch gekennzeichnet, dass** zur Unterstützung des Aufreißens der Holzspanplatte in Schritt 4 in Schritt 1 zwischen die Decklagen eine Zwischenlage aus relativ großen, schwach beleimten oder unbeleimten Holzspänen gestreut wird, die später zwischen den Schritten 3 und 4 ausgeblasen oder in Schritt 6 von der aufschäumenden Zwischenschicht fest mit eingebunden werden.

4. Verfahren nach Anspruch 3, **dadurch gekennzeichnet, dass** anstelle von Holzspänen ein anderes Material als Zwischenlage eingebracht wird, welches entweder in die aufschäumende Zwischenschicht in Schritt 6 eingebunden wird oder zwischen den Schritten 3 und 4 wieder entfernt wird.

5. Verfahren nach einem der Ansprüche 1 bis 4, **dadurch gekennzeichnet, dass** die Deckschichten unterschiedlich dick aber jede für sich gleichmäßig dick sind, wobei dies entweder durch unterschiedliche Temperaturen der oberen und unteren Pressflächen in Schritt 2 oder eine asymmetrisch eingebrachte Zwischenlage nach Anspruch 3 oder 4 gesteuert wird.

6. Verfahren nach einem der Ansprüche 1 bis 5, **dadurch gekennzeichnet, dass** in die Zwischenschicht Stoffe eingebracht werden, die die Eigenschaften der Leichtbau-Sandwichplatte in Bezug auf Stabilität, Absorption von Schall oder Strahlung verändern oder wegen ihrer geringen Kosten die Herstellkosten für die Zwischenschicht und damit für die Leichtbau-Sandwichplatte senken, nämlich Glasfasern oder Kohlefasern, Holzfasern, Siliziumoxid, Bleisulfat, Schaumpartikel aus Kunststoffen, beispielsweise Polystyrol, Polyurethanschäume oder organische Schäume aus Mais- oder Weizenstärke.

7. Verfahren nach einem der Ansprüche 1 bis 6, **dadurch gekennzeichnet, dass** als Leim zum Beleimen der Holzspäne für die Decklagen ein duroplastisches Harnstoff-Formaldehyd-Harz oder ein Polyurethansystem verwendet wird.

## Claims

1. A continuous method for producing lightweight sandwich panels, comprising: a lower cover layer,
and
an upper cover layer,
both of which consist of densely packed and firmly bonded wood chips and have a smooth outer surface as well as a rough, steam-permeable inner surface,
as well as
an intermediate layer comprising a synthetic resin rigid foam, which is arranged between the lower and the upper cover layer and is firmly bonded thereto, comprising at least the following steps:
1) providing a layered ply comprising at least one scattered lower cover ply and an upper cover ply scattered above it, both made from glued wood chips
2) compressing said ply between heated pressing surfaces with a pressing power of up to about 30 bar and a temperature of the pressing surfaces of around 130 to 250 °C to form a wood chipboard
3) moving the pressing surfaces apart and thereby releasing the pressure of the wood chipboard, thus causing the wood chipboard to split in the middle due to steam pressure built up in its core zone, and to divide into two equally thick cover layers, each having a smooth exterior and a rough interior surface,
4) guiding the cover layers apart, so that an intermediate layer can be introduced there between,
5) spraying a polyurethane system which is foamable and curable to form a polyurethane rigid foam, having at least the following components:
• isocyanate and/or polyisocyanate(s),
• at least one polyol
• one or more volatile propellant(s) on the inner surface(s) of the lower cover layer or of both cover layers,
6) foaming and condensing the polyurethane system until the polyurethane foam layer(s) is/are viscous to plastically deformable, but still compressible
7) guiding the upper and/or lower cover layer back, so that their distance, when a lightweight sandwich panel is to be produced, in which both cover layers have a smooth outer surface, is equal to the required thickness or, if a lightweight sandwich panel is to be produced, one or both cover layers of which have an outer surface which is matted by fine grinding, is 0.1 to 0.3 mm larger than the required thickness of the lightweight sandwich panel,
8) stabilizing the lightweight sandwich panel calibrated according to 7) by passing it between pressing surfaces arranged parallel to each other at a distance defined in 7), until the intermediate layer has reacted fully to yield polyurethane rigid foam,
9) tailoring (trimming) and neatening the edges of the lightweight sandwich panel in the form of a continuous strip into panels with standard commercial dimensions,
and
10) optionally matting the outer surface(s) of one or both cover layers by fine grinding to the required thickness of the lightweight sandwich panel **characterized in that**
a) the temperature of the pressing surfaces and the duration of the pressing process are selected in such a way that a high steam pressure builds up in the region of the inner surfaces of the cover layers, which splits the wood chipboard produced in step 2) in the middle through the relief of pressure caused by the divergent movement of the pressing surfaces in step 3) and divides said panel into two equally thick cover layers of densely packed and firmly bonded wood chips, having smooth outer surfaces and rough inner surfaces,
b) the cover layers are guided apart on leaving the press by means of rollers and/or conveyor belts, so that the distance between their inner surfaces becomes large enough to allow the spraying or insertion device for spraying or otherwise inserting the polyurethane system between the cover layers according to step 5,
c) the heat which was introduced into the cover layers during compression thereof is used to accelerate the reaction process of the polyurethane system.

2. The method according to claim 1, **characterized in that** the polyurethane system, in addition to or instead of the volatile propellant(s), contains water, which is incorporated into the chemical reaction, so that carbon dioxide is produced, which supports or replaces the propellant(s).

3. The method according to claim 1 or 2, **characterized in that** in order to support the splitting of the wood chipboard in step 4, an intermediate ply of relatively large, slightly glued or non-glued wood chips is scattered between the cover plies, the wood chips later being blown out between steps 3 and 4 or being firmly incorporated by the foaming intermediate layer in step 6.

4. The method according to claim 3, **characterized in that**, instead of wood chips, a different material is introduced as an intermediate ply, which is either incorporated into the foaming intermediate layer in step 6 or is removed again between steps 3 and 4.

5. The method according to one of claims 1 to 4, **characterized in that** the cover layers are of different thickness, but each layer in itself is of a consistent thickness, this being controlled either by different temperatures of the upper and lower pressing surfaces in step 2 or by an asymmetrically inserted intermediate ply according to claim 3 or 4.

6. The method according to one of claims 1 to 5, **characterized in that** substances are introduced into the intermediate layer which alter the properties of the lightweight sandwich panel with respect to stability, absorption of sound or radiation, or due to their low costs reduce the production costs for the intermediate layer and thus for the lightweight sandwich panel, namely glass fibers or carbon fibers, wood fibers, silicon oxide, lead sulfate, foam particles made from plastic material, such as polystyrene, polyurethane foams or organic foams made from corn or wheat starch.

7. The process according to one of claims 1 to 6, **characterized in that** a duroplastic urea-formaldehyde resin or a polyurethane system is used as glue for gluing the wood chips for the cover plies.

## Revendications

1. Procédé continu de fabrication de panneaux sandwich légers avec :
une couche extérieure inférieure
et
une couche extérieure supérieure
les deux étant composées de copeaux de bois fortement compactés et solidement collés les uns aux autres et comportent une surface extérieure lisse, ainsi qu'une surface intérieure brute, perméable à la vapeur,
ainsi
qu'une couche intermédiaire, qui comprend de la mousse rigide en résine synthétique, qui est disposée entre la couche extérieure inférieure et supérieure et est solidement reliée à celles-ci, comprenant au moins les étapes de procédé suivantes :
1) préparation d'une structure stratifiée, au moins une structure extérieure inférieure répartie et une structure extérieure supérieure répartie dessus, les deux étant composées de copeaux de bois collés,
2) compression de cette structure entre des surfaces de pressage chauffées avec une pression de pressage allant jusqu'à environ 30 bars et une température des surfaces de pressage d'environ 130 à 250°C pour former un panneau de particules,
3) écartement des surfaces de pressage et de ce fait décompression du panneau de particules, grâce à laquelle le panneau de particules s'ouvre au centre en raison de la pression de vapeur accumulée dans sa zone centrale et se divise en deux couches extérieures de même épaisseur avec respectivement une surface extérieure lisse et une surface intérieure brute,
4) écartement des couches extérieures de telle manière que la couche intermédiaire peut être incorporée entre celles-ci,
5) pulvérisation d'un système de polyuréthane expansible et durcissable en mousse rigide de polyuréthane avec au moins les composants suivantes :
• isocyanate et/ou polyisocyanate(s)
• au moins un polyol et
• un ou plusieurs agents porogènes évaporables
sur la/les surface(s) intérieure(s) de la couche extérieure inférieure ou des deux couches extérieures,
6) expansion et condensation du système de polyuréthane, jusqu'à ce que la/les couche(s) de mousse de polyuréthane devienne(nt) visqueuse(s) à plastiquement déformable(s), mais puisse(nt) être encore compressible(s),
7) retrait de la couche extérieure supérieure et/ou inférieure de telle manière que leur intervalle est égal à l'épaisseur théorique, si un panneau sandwich léger doit être fabriqué, pour lequel les deux couches extérieures comportent une surface extérieure lisse ou d'environ 0,1 à 0,3 mm supérieure à l'épaisseur théorique du panneau sandwich léger, si un panneau sandwich léger doit être fabriqué, pour lequel une ou les deux couches extérieure comportent une surface extérieure dépolie par ponçage fin,
8) stabilisation du panneau sandwich léger calibré selon 7), au cours de laquelle on glisse celui-ci entre les surfaces de pressage parallèles dans l'intervalle défini en 7) jusqu'à ce que la couche intermédiaire ait cessé de réagir en mousse rigide de polyuréthane,
9) confection (mise à longueur) et nettoyage des bords du panneau sandwich léger fabriqué sous forme de bande continue en panneaux aux dimensions commerciales,
10) dépolissage le cas échéant de la/des surfaces extérieure(s) d'une ou des deux couches extérieures par ponçage fin jusqu'à l'épaisseur théorique du panneau sandwich léger
**caractérisé en ce que**
a) la température des surfaces de pressage et la durée de l'opération de pressage sont choisies de telle manière qu'une pression de vapeur élevée s'accumule dans la zone des surfaces intérieures des couches extérieures, qui ouvre au centre le panneau de particules produit à l'étape 2) lors de la décompression causée par la séparation des surfaces de pressage à l'étape 3) et sépare en deux couches extérieures de même épaisseur en copeaux de bois fortement compactés et solidement collés les uns aux autres avec des surfaces extérieures lisses et des surfaces intérieures brutes,
b) les couches extérieures sont écartées en quittant la presse au moyen de cylindres et/ou bandes transporteuses de telle manière que l'intervalle entre leurs surfaces intérieures est suffisamment important pour pouvoir mettre en place le dispositif de pulvérisation ou de mise en oeuvre entre les deux couches extérieures pour la pulvérisation ou autre mise en oeuvre du système de polyuréthane selon l'étape 5,
c) la chaleur intégrée dans les couches extérieures lors de la compression de celles-ci, est utilisée pour accélérer le processus de réaction du système de polyuréthane.

2. Procédé selon la revendication 1, **caractérisé en ce que** le système de polyuréthane contient de l'eau en plus ou à la place de ou des agents porogènes évaporables, qui sont intégrés dans la réaction chimique de telle manière qu'il se crée du dioxyde de carbone, lequel soutient ou remplace le ou les agents porogènes.

3. Procédé selon la revendication 1 ou 2, caractérisé toutefois en ce que pour soutenir l'ouverture du panneau de particules à l'étape 4, on disperse à l'étape 1 entre les structures extérieures, une structure intermédiaire en copeaux de bois relativement gros, faiblement collés ou non collés, qui seront ultérieurement soufflés entre les étapes 3 et 4 ou solidement intégrés avec dans l'étape 6 par la couche intermédiaire en expansion.

4. Procédé selon la revendication 3, **caractérisé en ce qu'**à la place des copeaux de bois un autre matériau est mis en oeuvre en tant que structure intermédiaire, lequel est intégré dans l'étape 6 soit dans la couche intermédiaire en expansion, soit est à nouveau enlevé entre les étapes 3 et 4.

5. Procédé selon l'une quelconque des revendications 1 à 4, **caractérisé en ce que** les couches extérieures sont d'épaisseur différente, mais chacune d'épaisseur uniforme en elle-même, ceci soit par des températures différentes des surfaces de pressage supérieures et inférieures dans l'étape 2, soit une couche intermédiaire mise en oeuvre de manière asymétrique est dispersée selon la revendication 3 ou 4.

6. Procédé selon l'une quelconque des revendications 1 à 5, **caractérisé en ce que** des substances sont intégrées dans la couche intermédiaire, qui modifient les propriétés du panneau sandwich léger eu égard à la stabilité, l'absorption du bruit ou du rayonnement ou diminuent les frais de fabrication pour la couche intermédiaire et de ce fait pour le panneau sandwich léger en raison de leur faible coût, s'agissant notamment des fibres de verre ou fibres de carbone, des fibres de bois, de l'oxyde de silicium, du sulfate de plomb, des particules de mousse en matières plastiques, par exemple polystyrène, mousses de polyuréthane ou mousses organiques en amidon de maïs ou de froment.

7. Procédé selon l'une quelconque des revendications 1 à 6, **caractérisé en ce qu'**une résine urée-formaldéhyde thermodurcissable ou un système de polyuréthane est utilisé en tant que colle pour coller les copeaux de bois pour les structures extérieures.
